# FASCICULE DE BREVET EUROPEEN

(11) **EP 0 817 408 B1**
(45) Date de publication et mention de la délivrance du brevet: **18.09.2002**
(21) Numéro de dépôt: 97401452.4
(22) Date de dépôt: 23.06.1997
(51) Int. Cl.: H04B 10/158

(54) **Récepteur pour système de transmissions de signaux numériques par voie optique**
Empfänger für Übertragungssystem eines optischen Digitalsignals
Receiver for optical digital signal transmission system

(30) Priorité: 26.06.1996 FR 9607926
(43) Date de publication de la demande: 07.01.1998
(73) Titulaire: ALCATEL, 75008 Paris (FR)
(72) Inventeur: Grandpierre, Georges, 95630 Guibeville (FR)
(74) Mandataire: Sciaux, Edmond

(56) Documents cités:
- EP-A- 0 534 433
- GB-A- 2 262 836
- US-A- 5 335 109
- H.NAKANO ET AL: "High-gain 10 Gbit/s 3R optical repeater with direct clock extraction" IOOC-ECOC '91. 17TH EUROPEAN CONFERENCE ON OPTICAL COMMUNICATION, vol. 1, no. WEA9-5, 9 - 12 septembre 1991, PARIS, FRANCE, pages 513-516, XP002026958
- PATENT ABSTRACTS OF JAPAN vol. 096, no. 010, 31 octobre 1996 & JP 08 163050 A (OKI ELECTRIC IND CO LTD), 21 juin 1996,
- PATENT ABSTRACTS OF JAPAN vol. 96, no. 001 & JP 08 018505 A (NIPPON TELEGR & TELEPH CORP), 19 janvier 1996,

## Description

La présente invention est relative à un récepteur pour système de transmission de signaux numériques par voie optique.

La transmission de signaux par fibres optiques est une technique qui tend à se répandre pour diverses applications, notamment pour les lignes téléphoniques sous-marines. Cette technique permet de grands débits à large bande passante, sans altération notable des signaux.

Le développement des télécommunications amène à concevoir des lignes de transmission optiques à débits de données de plus en plus importants.

L'article de H. NAKANO et al, "High Gain 10 Gigabits/s 3R Optical Repeater With Direct Clock Extraction" 100C-ECOC 91, 17^{th} European Conference on Optical Communication, vol 1, n° WEA9-5, 9-12 septembre 1991, Paris, France, décrit un récepteur de signaux optiques numériques comportant :
- un photodétecteur commun à une voie de traitement des données et à une voie de traitement ou récupération du signal d'horloge ;
- et un amplificateur optique disposé en amont des moyens photodétedeurs.

On a constaté que les récepteurs actuels fournissaient de bons résultats pour des débits allant jusqu'à environ 5 Gbit/s. Par contre, pour des débits plus élevés, la qualité de la réception n'est pas suffisante.

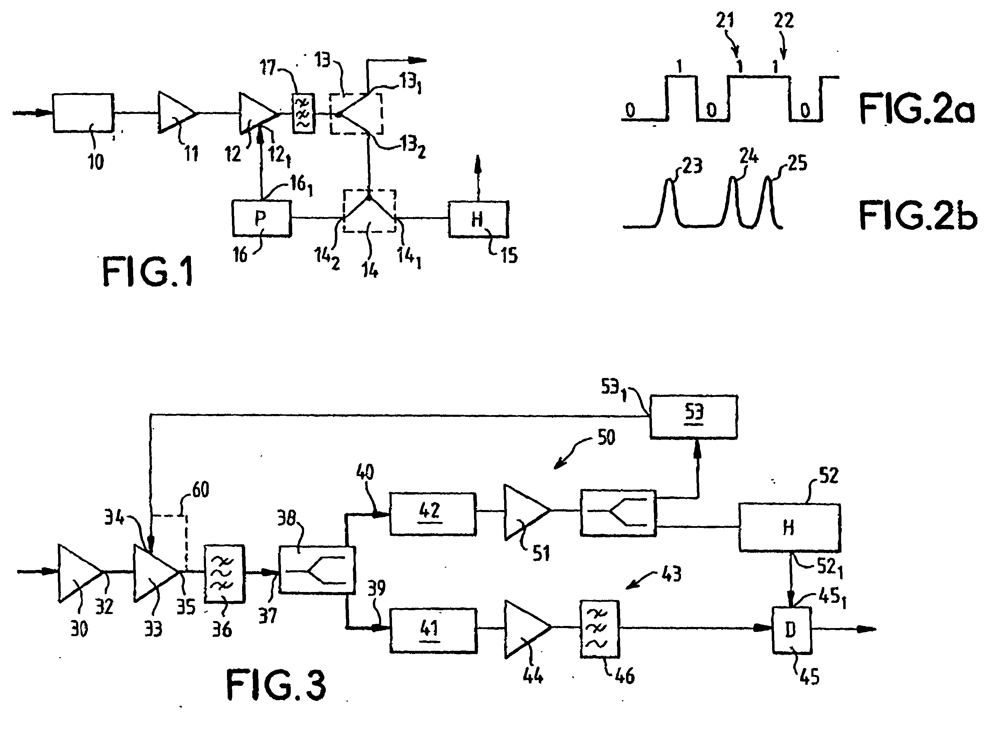

Un autre récepteur connu comprend (figure 1) un détecteur 10 de signal optique, en général une photodiode, un préamplificateur 11 à gain important mais faible bruit, et un amplificateur électrique 12 à contrôle automatique de gain (CAG). Les signaux reçus par la photodiode 10 sont de type numérique (binaire). Le signal de sortie de l'amplificateur 12 est délivré à l'entrée d'un séparateur électrique 13 par l'intermédiaire d'un filtre passe-bas de Bessel 17. Le séparateur comporte une sortie 13₁ qui fournit le signal de sortie de l'amplificateur 12 à un circuit de traitement de données (non représenté), et une sortie 13₂ connectée à l'entrée d'un coupleur 14.

Ce coupleur 14 présente deux sorties 14₁ et 14₂ ; la sortie 14₁ est connectée à l'entrée d'un circuit 15 de traitement et/ou de récupération du signal d'horloge H et la sortie 14₂ est reliée à l'entrée d'un circuit 16 de détection de crête. Quand le signal d'horloge se trouve dans le signal reçu, le circuit 15 filtre et amplifie ce signal ; quand le signal d'horloge ne se trouve pas directement dans le signal reçu, le circuit 15 effectue un traitement de ce signal reçu pour récupérer l'horloge. Le circuit 16 fournit, sur sa sortie 16₁, un signal représentant la puissance du signal de sortie de l'amplificateur 12. La sortie 16₁ est reliée à l'entrée 12₁ de commande de gain de l'amplificateur 12, La commande du gain est telle que le signal de sortie de l'amplificateur 12 reste à un niveau moyen constant.

On a constaté que, pour des débits supérieurs à 5 Gbits/s, la qualité des signaux obtenus à la sortie d'un récepteur du type de celui représenté sur la figure 1 se dégrade par rapport à la qualité des signaux à débit plus faible. La dégradation se traduit tant par du bruit d'amplitude pour les "0" et les "1" du signal que par une imprécision temporelle sur la position des éléments d'information.

Des études ont montré que cette dégradation a pour origine, d'une part, une gigue (jitter) temporelle introduite par l'amplificateur à CAG, 12, et d'autre part, une pollution provenant des circuits 15 et 16 qui réinjectent, par leurs entrées respectives, des signaux polluants qui perturbent les signaux de données. Les coupleurs 13 et 14 peuvent aussi contribuer à la pollution.

En outre, l'amplificateur 12 est difficile à réaliser pour une large bande passante, sans déformation des impulsions.

Ainsi, le récepteur de la figure 1 ne peut convenir pour des lignes devant transmettre des informations à un débit supérieur à 10 Gbits/s, alors qu'on cherche des débits pouvant atteindre 40 Gbits/s.

Le document JP 08 163050 décrit un récepteur de signaux optiques numériques comportant :
- deux photodétecteurs, le premier photodétecteur étant relié à une voie de traitement des données et le second photodétecteur étant relié à une voie de traitement ou récupération du signal d'horloge comportant un récepteur optique différentiel;
- et un amplificateur optique à gain fixe disposé en amont des moyens photodétedeurs.

Ce récepteur est bien adapté aux débits très élevés, et il fournit un signal d'horloge à faible gigue car le récepteur optique différentiel extrait le signal d'horloge d'un signal optique et non d'un signal électrique dérivé du signal optique. Cependant ce récepteur ne convient que pour des signaux d'entrée ne présentant de fortes variations de puissance. Si ce n'est pas le cas, la restitution des données peut être erronée.

Le but de l'invention est de remédier à cet inconvénient sans avoir les inconvénients du récepteur connu comportant un amplificateur à CAG.

L'objet de l'invention est un récepteur de signaux optiques numériques comportant :
- deux photodétecteurs, le premier photodétecteur étant relié à une voie de traitement des données et le second photodétecteur étant relié à une voie de traitement ou récupération du signal d'horloge ;
- et un amplificateur optique disposé en amont des moyens photodétecteurs ;
**caractérisé** en ce que l'amplificateur optique est à gain variable ;
et en ce qu'une entrée de commande de gain de l'amplificateur est couplée au second photodétecteur pour commander le gain de l'amplificateur optique.

Avec un tel récepteur, on constate que les impulsions détectées ne sont pas déformées, comme c'est le cas quand on utilise un amplificateur à contrôle automatique de gain de type électrique. En outre, la réalisation d'un amplificateur optique à contrôle automatique de gain est plus aisée que la réalisation d'un amplificateur de type électrique, pour une large bande passante.

Dans le mode de réalisation préféré de l'invention, la commande du contrôle automatique de gain de l'amplificateur optique est également dérivée du signal de sortie du second photodétecteur.

Avec cette réalisation, on peut utiliser dans la voie de données - celle du premier photodétecteur - un amplificateur à gain relativement faible et fixe, et donc aisé à réaliser avec une qualité optimale, c'est-à-dire qui ne déforme pas les impulsions. Cette propriété est favorable au fonctionnement satisfaisant du récepteur pour des très hauts débits.

D'autres caractéristiques et avantages de l'invention apparaîtront avec la description de certains de ses modes de réalisation, celle-ci étant effectuée en se référant aux dessins ci-annexés sur lesquels :
La figure 1, déjà décrite, est un récepteur de l'état antérieur de la technique.
Les figures 2a et 2b sont des diagrammes représentant des signaux dans un système de télécommunication optique.
la figure 3 est un schéma d'un récepteur selon un mode de réalisation préféré de l'invention, et
la figure 4 est un schéma d'une variante de réalisation.

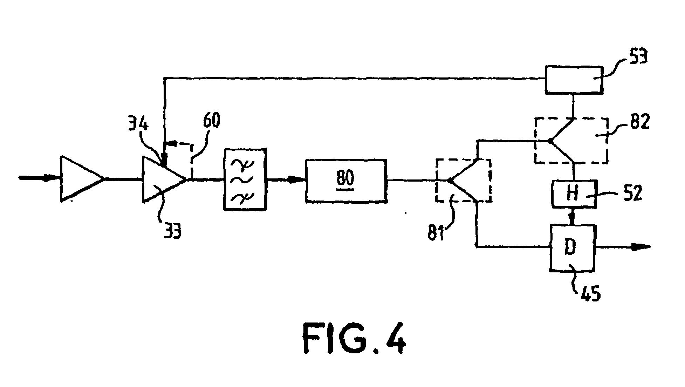

L'exemple de réalisation de l'invention que l'on va décrire en relation avec les figures 3 et 4 est destiné à la réception de signaux provenant d'un système de transmission optique de données, notamment téléphoniques, en particulier une transmission à l'aide de câbles immergés (sous-marins).

Les impulsions transmises par la ligne sont soit en format NRZ, comme représenté sur la figure 2a, soit en format Soliton, comme représenté sur la figure 2b.

En format NRZ, les impulsions sont de type rectangulaire, avec un niveau bas (0) et un niveau haut (1). Entre deux "1" successifs, 21 et 22 (figure 2a), le signal ne retourne pas au niveau bas (pas de retour à zéro).

Dans le format Soliton (figure 2b), les "1" sont représentés par des pics 23, 24, 25 etc. Entre deux "1" successifs, le signal retourne à "0". Dans ce format, chaque impulsion a une puissance de crête importante. Par contre, sa puissance moyenne est relativement faible, si on la compare au signal en format NRZ.

Dans ce qui suit, on ne considérera que la transmission en format Soliton. Mais, bien entendu, la transmission en format NRZ ou RZ, ou avec d'autres formats analogues, entre dans le cadre de l'invention.
Le récepteur représenté sur la figure 3 comprend, à l'entrée, un amplificateur optique 30 de gain fixe relativement élevé,, et de faible facteur de bruit. Le gain est de l'ordre de 20 décibels (soit un gain de 100 en puissance et de 10 en tension).
Cet amplificateur optique 30 est, par exemple, de type à fibre dopée. Sa sortie 31 est connectée à l'entrée 32 d'un autre amplificateur optique 33, également de type à fibre dopée, avec une entrée 34 de commande de gain. De façon en soi connue, le gain est commandé par l'intensité du courant de la pompe (non montrée) d'excitation du laser que constitue l'amplificateur optique 33.

La sortie 35 de l'amplificateur optique 33 est connectée à l'entrée d'un filtre optique passe-bande 36 dont la sortie est reliée à l'entrée 37 d'un coupleur optique 38 présentant deux sorties, respectivement 39 et 40, qui délivrent des signaux lumineux identiques. Le signal lumineux de la sortie 39 est détecté par une photodiode 41 de type PIN. De même, le signal lumineux émis par la sortie 40 est détecté par une seconde photodiode 42, également de type PIN.

Les signaux de données sont extraits de la photodiode 41 tandis que le signal d'horloge et un signal représentant les crêtes du signal de données (les impulsions Soliton) sont extraits de la photodiode 42.

La voie (électrique) 43 d'extraction du signal de données comporte, à l'aval de la photodiode 41, un amplificateur 44 de gain constant et de valeur faible. La sortie de cet amplificateur 44 est reliée à une bascule 45 de type D par l'intermédiaire d'un filtre passe-bas 46, notamment un filtre de Bessel.

La voie (également électrique) 50 de récupération ou traitement du signal d'horloge et d'élaboration du signal de détection de crête comporte un amplificateur 51 de gain faible, qui est connecté à la sortie de la photodiode 42 et qui est relié, d'une part, à un circuit 52 de traitement ou de récupération d'horloge, et, d'autre part, à un circuit 53 de détection de crête par l'intermédiaire d'un séparateur électrique 54 dont l'entrée est reliée à la sortie de l'amplificateur 51 et les deux sorties sont reliées aux entrées respectives des circuits 52 et 53.

La sortie 52₁ du circuit 52 de récupération d'horloge est connectée à l'entrée d'horloge 45₁ de la bascule D 45.

La sortie 53₁ du circuit 53 de détection de crête est reliée à l'entrée 34 de contrôle de gain de l'amplificateur optique 33.

Dans l'exemple, l'amplificateur 51 de la voie 50 d'élaboration du signal de détection de crête et de récupération du signal d'horloge a, en plus de sa fonction d'amplification, une fonction de filtre passe-bas afin d'écrêter les impulsions Soliton. Cette propriété permet une commande du gain de l'amplificateur 33 qui est seulement fonction de la puissance moyenne des impulsions Soliton et non de la puissance de crête. L'écrêtage réalisé par le filtre amplificateur 51 ne perturbe pas la récupération du signal d'horloge par le circuit 52.

Le filtre passe-bas de Bessel 46, qui se trouve dans la voie 43 de récupération des données, permet d'améliorer le rapport signal à bruit.

La structure de récepteur que l'on vient de décrire en relation avec la figure 3 présente de nombreux avantages par rapport au récepteur connu représenté sur la figure 1. En particulier :
- La photodiode 41 reçoit toujours un signal de valeur maximale, car elle se trouve à l'aval de l'amplificateur optique 33 à contrôle automatique de gain dont le gain est commandé de façon telle que, sur sa sortie, soit délivré un signal optique moyen sensiblement constant qui peut donc être choisi de valeur optimale. Dans le cas de la figure 1, on voit que la photodiode correspondante, 10, ne reçoit pas toujours un signal de valeur optimale car elle se trouve en amont de l'amplificateur 12 à contrôle automatique de gain. Avec l'invention, la photodiode 41 reçoit donc un signal optique de valeur optimale qui masque le bruit thermique propre de cette photodiode.

De même, la photodiode 42 reçoit un signal optique de valeur optimale.

L'optimisation des signaux reçus par les photodiodes permet, comme déjà mentionné, d'optimiser le choix et la réalisation des circuits électroniques à l'aval des ces photodiodes 41 et 42.

Ainsi, l'amplificateur 44, à l'aval de la photodiode 41, présente un gain constant de valeur faible, ce qui rend sa réalisation relativement aisée et ce qui est favorable au maintien de la forme des impulsions. Cette disposition contribue, dans une grande mesure, à la faculté du récepteur de pouvoir détecter des impulsions de très haut débit, notamment de l'ordre de 20 Gbit/s ou plus.
- On rappelle aussi que l'utilisation d'un amplificateur optique 33 à contrôle automatique de gain, à la place d'un amplificateur à contrôle automatique de gain de type électrique, est particulièrement favorable à une détection sans déformation des impulsions à haut débit.
- Enfin, les circuits 53 et 52 de détection de crête et de récupération du signal d'horloge sont pratiquement indépendants, du point de vue électrique, de la voie de données. On limite ainsi la pollution de la voie de données par les signaux provenant des circuits 52 et 53.

Dans une variante, qui est représentée par le trait interrompu 60 sur la figure 3, le contrôle automatique de gain de l'amplificateur optique 33 est réalisé de façon optique par la connexion 60 de la sortie 35 de cet amplificateur à son entrée 34 de contrôle du gain. Dans cette variante, le circuit 53 n'est pas prévu.

Dans une autre variante, représentée sur la figure 4, on prévoit une seule diode de détection 80 qui est connectée à un premier coupleur 81 dont une sortie est reliée à une bascule D 45 et dont l'autre sortie est reliée à un deuxième coupleur 82 présentant une sortie pour un circuit 52 de récupération d'horloge et une sortie reliée à un circuit 53 de détection de crête qui commande l'entrée 34 de contrôle de gain de l'amplificateur optique 33. Dans une variante de cette figure 4, on ne prévoit pas de circuit 53, mais une connexion 60 entre la sortie de l'amplificateur 33 et son entrée 34 de contrôle de gain, comme dans la variante décrite plus haut pour la figure 3.

L'exemple représenté sur la figure 4 présente des performances moins élevées que celles obtenues avec l'exemple de la figure 3. Par "performances" on entend la qualité du signal obtenu. Toutefois, son coût est moindre car il comporte un nombre réduit de composants et, par rapport au récepteur connu, il conserve l'avantage de fonctionner à très haut débit, notamment grâce à la présence de l'amplificateur optique 33 à contrôle de gain.

## Revendications

1. Récepteur de signaux optiques numériques comportant :
- deux photodétecteurs (41, 42), le premier photodétecteur (41) étant relié à une voie (43) de traitement des données et le second photodétecteur (42) étant relié à une voie (50) de traitement ou récupération du signal d'horloge;
- et un amplificateur optique (33) disposé en amont des moyens photodétecteurs ;
**caractérisé en ce que** l'amplificateur optique (33) est à gain variable ;
et **en ce qu'**une entrée de commande de gain de l'amplificateur (33) est couplée au second photodétecteur (42) pour commander le gain de l'amplificateur optique (33).

2. Récepteur selon la revendication 1, **caractérisé en ce que**, dans la voie (50) reliée au second photodétecteur (42), on prévoit un moyen (51) décrêtage d'impulsions à l'amont de l'élément (53) de commande du gain de l'amplificateur optique (33).

3. Récepteur selon l'une quelconque des revendications 1 à 2, **caractérisé en ce qu'**il comprend, des la voie (50) reliée au second photodétecteurs (42), un amplificateur (51) de gain fixe et de valeur relativement faible.

4. Récepteur selon la revendication 1, **caractérisé en ce qu'**il comporte, dans la voie (43) de récupération du signal de données, à l'aval du premier photodétecteur (41), un amplificateur électrique (44) de gain fixe et de valeur relativement faible.

5. Récepteur selon l'une quelconque des revendications précédentes, **caractérisé en ce que** les impulsions numériques reçues sont en format Soliton.

6. Récepteur selon l'une quelconque des revendications 1 à 4, **caractérisé en ce que** les impulsions reçues sont en format NRZ.

7. Récepteur selon la revendication 1, **caractérisé en ce que** la commande du gain de l'amplificateur optique (33) comporte une connexion de la sortie (35) de cet amplificateur optique (35) à son entrée (34) de contrôle de gain.

8. Récepteur selon l'une quelconque des revendications précédentes, **caractérisé en ce que** le contrôle automatique de gain de l'amplificateur optique est effectué par le réglage de l'intensité du courant de pompe du laser que constitue ledit amplificateur optique (33).

9. Récepteur selon l'une quelconque des revendications précédentes, **caractérisé en ce qu'**il comporte, de préférence en amont de l'amplificateur optique (33) à commande de gain, un amplificateur optique (30) de gain constant et de faible fadeur de bruit

10. Récepteur selon l'une quelconque des revendications précédentes, **caractérisé en ce que** le débit de données est au moins égal à 10 Gbits/s.

## Claims

1. A receiver of digital optical signals, including:
- two photodetectors (41, 42), the first photodetector (41) being connected to a data processing channel (43) and the second photodetector (42) being connected to a clock signal recovery or processing channel (50); and
- an optical amplifier (33) disposed on the upstream side of the photodetector means;
**characterized in that** the optical amplifier (33) has a variable gain;
and **in that** a gain control input of the amplifier (33) is coupled to the second photodetector (42) to control the gain of the optical amplifier (33).

2. A receiver according to claim 1 **characterized in that** the channel (50) connected to the second photodetector (42) includes pulse peak limiter means (51) on the input side of the device (53) for controlling the gain of the optical amplifier (33).

3. A receiver according to either claim 1 or claim 2 **characterized in that** it includes in the channel (50) connected to the second photodetector (42) on amplifier (51) of fixed and relatively low gain.

4. A receiver according to claim 1 **characterized in that** it includes an electric amplifier (44) of fixed and relatively low gain in the data signal recovery channel (43) on the output side of the first photodetector (41).

5. A receiver according to any of the preceding claims **characterized in that** the received digital pulses are soliton pulses.

6. A receiver according to any of claims 1 to 4 **characterized in that** the received pulses are NRZ pulses.

7. A receiver according to claim 1 **characterized in that** it includes a connection from the output (35) of the optical amplifier (35) to its gain control input (34) to control the gain of the optical amplifier (33).

8. A receiver according to any of the preceding claims **characterized in that** the gain of the optical amplifier is controlled by adjusting the intensity of the pump current of a laser constituting said optical amplifier (33).

9. A receiver according to any of the preceding claims **characterized in that** it includes a constant gain low-noise optical amplifier (30), preferably on the input side of the gain control optical amplifier (33).

10. A receiver according to any of the preceding claims **characterized in that** the data bit rate is at least 10 Gbit/s.

## Patentansprüche

1. Empfänger für digitale optische Signale mit:
zwei Photodetektoren (41, 42), wobei der erste Photodetektor (41) mit einem Datenverarbeitungskanal (43) verbunden ist und der zweite Photodetektor (42) mit einem Taktsignalverarbeitungs- oder - wiedergewinnungskanal (50) verbunden ist;
und einem vor den Photodetektormitteln angeordneten optischen Verstärker (33),
**dadurch gekennzeichnet, dass** der optische Verstärker (33) variable Verstärkung hat, und dass ein Verstärkungssteuereingang des Verstärkers (33) an den zweiten Photodetektor (42) gekoppelt ist, um die Verstärkung des optischen Verstärkers (33) zu steuern.

2. Empfänger nach Anspruch 1, **dadurch gekennzeichnet, dass** auf dem mit dem zweiten Photodetektor (42) verbundenen Kanal (50) vor dem Element (53) zur Steuerung der Verstärkung des optischen Verstärkers (33) ein Impulsbegrenzungsmittel (51) vorgesehen ist.

3. Empfänger nach einem beliebigen der Ansprüche 1 bis 2, **dadurch gekennzeichnet, dass** er auf dem mit dem zweiten photodetektor (42) verbundenen Kanal (50) einen Verstärker (51) mit fester Verstärkung und relativ geringem Wert aufweist.

4. Empfänger nach Anspruch 1, **dadurch gekennzeichnet, dass** er auf dem Kanal (43) zur Wiedergewinnung des Datensignals hinter dem ersten Photodetektor (41) einen elektrischen Verstärker (44) mit fester Verstärkung und relativ geringem Wert aufweist.

5. Empfänger nach einem beliebigen der vorhergehenden Ansprüche, **dadurch gekennzeichnet, dass** die empfangenen digitalen Impulse im Solitonenformat sind.

6. Empfänger nach einem beliebigen der Ansprüche 1 bis 4, **dadurch gekennzeichnet, dass** die empfangenen Impulse im NRZ-Format sind.

7. Empfänger nach Anspruch 1, **dadurch gekennzeichnet, dass** die Steuerung der Verstärkung des optischen Verstärkers (33) eine Verbindung des Ausgangs (35) dieses optischen Verstärkers (35) mit seinem Verstärkungssteuereingang (34) umfasst.

8. Empfänger nach einem beliebigen der vorhergehenden Ansprüche, **dadurch gekennzeichnet, dass** die automatische Steuerung der Verstärkung des optischen Verstärkers durchgeführt wird durch Regeln der Stärke des Pumpstroms des Lasers, der den optischen Verstärker (33) bildet.

9. Empfänger nach einem beliebigen der vorhergehenden Ansprüche, **dadurch gekennzeichnet, dass** er, vorzugsweise vor dem optischen Verstärker (33) mit Verstärkungssteuerung, einen optischen Verstärker (30) mit konstanter Verstärkung und niedrigem Rauschfaktor umfasst.

10. Empfänger nach einem beliebigen der vorhergehenden Ansprüche, **dadurch gekennzeichnet, dass** die Datenrate wenigstens gleich 10 GBit/s ist.
